# EUROPEAN PATENT SPECIFICATION

(11) **EP 1 628 086 B1**
(45) Date of publication and mention of the grant of the patent: **01.04.2015**
(21) Application number: 05107298.1
(22) Date of filing: 08.08.2005
(51) Int. Cl.: F24F 11/00, F25B 13/00

(54) **Air conditioner**
Klimaanlage
Conditionneur d'air

(30) Priority: 11.08.2004 KR 2004063180
(43) Date of publication of application: 22.02.2006
(73) Proprietor: Samsung Electronics Co., Ltd., Suwon-si, Gyeonggi-do, 443-742 (KR)
(72) Inventor: Seo, Hyeong-joon, Suwon-si Gyeonggi-do (KR); Lee, Jun-pyo, Seongnam-si Gyeonggi-do (KR); Jeong, Jae-hyo, Yeongtong-gu Suwon-si Gyeonggi-do (KR); Choi, Jung-chul, Gwonseon-gu Gyeonggi-do (KR); Kim, Seung-chul, Seocho-gu Seoul (KR)
(74) Representative: Grey, Ian Michael

(56) References cited:
- EP-A- 0 448 345
- EP-A- 1 288 593
- EP-A- 1 371 914
- JP-A- 4 006 372

## Description

The present invention relates to an air conditioner for heating or cooling a space including a compressor, an indoor heat exchanger located in said space and an outdoor heat exchanger connected together in a refrigeration circuit, the air conditioner further comprising a control unit for controlling the flow of refrigerant through said refrigeration circuit. Such an air conditioning system is known from EP 0448345A.

An air conditioning system generally employs a refrigeration cycle to control air temperature and humidity in residential and office buildings. The air refrigeration cycle comprises the steps of compression, condensation, expansion and evaporation of refrigerant in the system, such that heating is achieved by heat radiation due to the condensation process, and cooling is achieved by heat absorption due to the evaporation process.

One type of air conditioning system is a gas engine-driven heat pump (GHP) type air conditioning system, wherein the driving force of a gas engine is used to drive a compressor, and the waste heat of the gas engine is recovered. The GHP type air conditioning system can be substituted for an electric motor-driven heat pump (EHP) type air conditioning system. A problem with an EHP type air conditioning system is that a disequilibrium exists between the demand and supply of electric power dependent on a cooling demand increase in summer.

A conventional air conditioning system has the following problems when a heating operation is performed at a low outdoor temperature. Firstly, the pressure of the refrigerant discharged from the compressor (i.e., a high pressure part) and the pressure of the refrigerant introduced into the compressor (i.e., a low pressure part) are both low even when the gas engine is rotated at a maximum speed. This means that only a small amount of the refrigerant is circulated and so the heating effect of the air conditioning system is lowered.

Secondly, in a conventional air conditioning system, the heating effect depends on the adjustment of an outdoor expansion valve. Therefore, the heating effect is limited when the outdoor temperature is low. In the case of the GHP type air conditioning system, the heating effect may be adjusted by controlling a cooling water valve to adjust cooling water heated by waste heat of the gas engine. The allowable adjustment is limited.

The present invention seeks to provide an air conditioning system which overcomes or substantially alleviates the problems discussed above.

An air conditioning system according to the present invention is characterised by a bypass conduit to divert refrigerant that has flowed through the indoor heat exchanger during a heating operation back to the compressor when an outdoor temperature sensed by an outdoor temperature sensor is at or below a predetermined outdoor reference temperature and, when a refrigerant pressure sensed by a low pressure sensor is at or below a predetermined pressure.

Preferably, the air conditioner comprises a bypass valve disposed in the bypass conduit, the control unit being operable to open and close the valve to permit or prevent the flow of refrigerant through the bypass conduit.

In one embodiment, the air conditioner comprises an expansion valve, the bypass conduit being positioned such that refrigerant that has passed through the indoor heat exchanger is diverted through the bypass conduit prior to passing through the expansion valve.

Preferably, the bypass valve comprises high and low flow capacity valve members, and the control unit is operable to open the high flow capacity valve prior to opening the low flow capacity valve.

The present invention also provides a method of controlling an air conditioner for heating or cooling a space including a compressor, an indoor heat exchanger located in said space and an outdoor heat exchanger connected together in a refrigeration circuit, the air conditioner further comprising a control unit for controlling the flow of refrigerant through said refrigeration circuit.

The method according to the present invention is characterised by the step of diverting refrigerant that has flowed through the indoor heat exchanger during a heating operation back to the compressor via a bypass conduit, when an outdoor temperature sensed by an outdoor temperature sensor is at or below a predetermined outdoor reference temperature and, when a refrigerant pressure sensed by a low pressure sensor is at or below a predetermined pressure.

Preferably, the compressor drive comprises a gas heat pump.

Embodiments of the present invention will now be described, by way of example only, with reference to the accompanying drawings, in which:
Figure 1 illustrates a configuration of an air conditioning system of the present invention;
Figure 2 is a control block diagram of the air conditioning system shown in Figure 1;
Figure 3 is a control flowchart of the air conditioning system; and
Figures 4 and 5 are graphs showing effects of the air conditioning system.

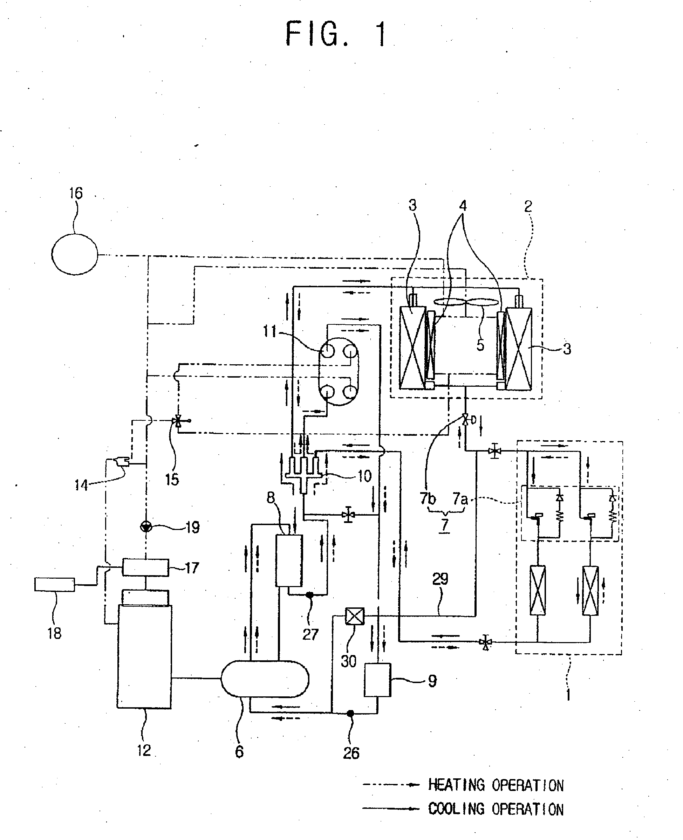

Referring to the drawings, there is shown in Figure 1 an air conditioning system including a compressor 6, an outdoor heat exchanging unit 2, a refrigerant expansion unit 7, and an indoor heat exchanging unit 1, which are connected in sequence by a refrigerant pipe in sequence to form a closed loop. Herein, the refrigerant pipe connected between the compressor 6 outlet and the refrigerant expansion unit 7 is a high pressure pipe to guide high pressure refrigerant discharged from the compressor 6. The refrigerant pipe connected between the refrigerant expansion unit 7 and the compressor 6 inlet is a low pressure pipe to guide low pressure refrigerant expanded by the refrigerant expansion unit 7.

The low-pressure pipe and the high-pressure pipe are connected to cross each other by a four-way directional valve 10. The four-way directional valve 10 switches the refrigerant flow direction such that the air conditioning system can selectively perform cooling and heating operations.

During a heating operation, the refrigerant flows along a path shown by broken line arrows in Figure 1 through the compressor 6, the four-way directional valve 10, the indoor heat exchanging unit 1, the refrigerant expansion unit 7, the outdoor heat exchanging unit 2, the four-way directional valve 10 and the compressor 6, in sequence. Therefore, during a heating operation the high pressure section of refrigerant pipe connects the compressor 6 outlet, the four-way directional valve 10, the indoor heat exchanging unit 1 and the refrigerant expansion unit 7. Hence, the low pressure section of the refrigerant pipe connects the refrigerant expansion unit 7, the outdoor heat exchanging unit 2, the four-way directional valve 10 and the compressor 6 inlet.

When the air conditioning system operates in a cooling mode, the refrigerant flows along the path shown by the solid line arrows through the compressor 6, the four-way directional valve 10, the outdoor heat exchanging unit 2, the refrigerant expansion unit 7, the indoor heat exchanging unit 1, the four-way directional valve 10 and the compressor 6 in sequence. In this mode therefore, the high pressure portion of the refrigerant pipe connects the compressor 6 outlet, the four-way directional valve 10, the outdoor heat exchanging unit 2 and the refrigerant expansion unit 7 and the low pressure portion of the refrigerant pipe connects the refrigerant expansion unit 7, the indoor heat exchanging unit 1, the four-way directional valve 10 and the compressor 6 inlet.

An oil separator 8 is located along the high-pressure pipe between the compressor 6 outlet and the four-way directional valve 10. Oil contained in the refrigerant discharged from the compressor 6 is filtered by the oil separator 8 and the filtrated refrigerant is returned to the compressor 6. The oil lubricates while the compressor 6 operates.

The outdoor heat exchanging unit 2 includes an outdoor heat exchanger 3 to circulate the refrigerant, a cooling water heat radiator 4 to circulate cooling water for a compressor driver 12, and a fan 5 to blow air across the outdoor heat exchanger 3 and the cooling water heat radiator 4.

The indoor heat-exchanging unit 1 is located in a space to be cooled or heated, such that heat is exchanged with air contained in the space, henceforth cooling or heating the space.

An accumulator 9 is located along the low pressure pipe at the compressor 6 inlet. The accumulator 9 prevents liquid refrigerant from flowing into the compressor 6.

The refrigerant expansion unit 7 comprises an indoor expansion valve 7a provided in the indoor heat exchanging unit 7, and an outdoor expansion valve 7b provided adjacent to the outdoor heat exchanging unit 2. The indoor expansion valve 7a expands refrigerant flowing from the outdoor heat-exchanging unit 2 towards the indoor heat-exchanging unit 1 during a cooling operation. The outdoor expansion valve 7a expands refrigerant flowing from the indoor heat-exchanging unit 1 to the outdoor heat-exchanging unit 2 during a heating operation.

The air conditioning system employs a gas engine-driven heat pump (GHP) as the compressor driver 12 to drive the compressor 6. The GHP uses a gas engine driven with gas. Waste heat generated by the gas engine during operation of the compressor driver 12, is transferred to the cooling water circulating along a cooling water pipe.

As mentioned above, the air conditioning system also comprises a cooling water circulating system to remove or exploit waste heat generated by the gas engine when the compressor driver 12 is operated. The cooling water circulating system includes the cooling water pipe forming a closed loop, and a cooling water pump 19 to induce the cooling water to flow. The cooling water flowing along the cooling water pipe by the cooling water pump 19 absorbs waste heat generated by the compressor driver 12 therein, cooling the compressor driver 12 and heating the cooling water.

Thereinafter, the heated cooling water is controlled by a thermostat 14 such that it returns to the compressor driver 12 or flows towards a cooling water valve 15 dependent on whether the water temperature exceeding a predetermined temperature. If the cooling water exceeds the predetermined temperature it flows to the cooling water valve 15.

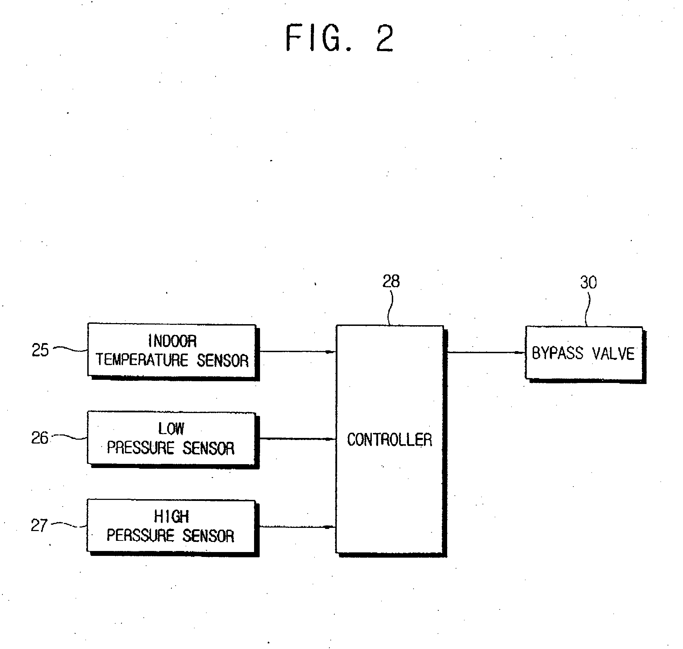

Referring to Figure 2, the cooling water valve 15 is opened and closed by a controller 28 allowing the cooling water to selectively flow towards either a refrigerant heating part 11 or the outdoor heat exchanging unit 2. Hereinafter, a circulation path of the cooling water flowing towards the outdoor heat exchanging unit 2 will be called an outdoor heat exchanging circulation path and the circulation path of the cooling water flowing towards the refrigerant heating part 11 will be called a refrigerant heating circulation path.

The controller 28 controls the cooling water valve 15 such that the cooling water flows from the thermostat 14 to the refrigerant heating part 11 along the refrigerant heating circulation path during the heating operation. The controller 28 also controls the cooling water valve 15 such that the cooling water flows from the thermostat 14 to the cooling water heat radiator 4 of the outdoor heat exchanging unit 2 along the outdoor heat exchanging circulation path during the cooling operation.

As shown in Figures 1 and 2, the air conditioning system further includes a cooling water tank 16, a discharging gas heat exchanging unit 17, a discharging muffler 18, an outdoor temperature sensor 25, a high pressure sensor 27, a low pressure sensor 26, a bypass pipe 29, a bypass valve 30, and the controller 28.

The outdoor temperature sensor 25 is located externally from the internal space such that it can sense the external temperature, and transmit the information to the controller 28.

The high pressure sensor 27 is installed along the high pressure pipe adjacent to the compressor 6 outlet and senses the pressure of the refrigerant flowing in the high pressure pipe so that it can transmit information regarding the sensed pressure to the controller 28. The high pressure sensor 27 is installed between the oil separator 8 and the four-way directional valve 10.

The low pressure sensor 26 is installed between the compressor 6 and the accumulator 9 and senses the pressure of the refrigerant flowing in the low pressure pipe, so that it can transmit information regarding the sensed pressure to the controller 28. The low pressure sensor 26 is installed between the compressor 6 and the accumulator 9.

The bypass pipe 29 connects the refrigerant pipe disposed between the outdoor heat exchanging unit 2 and the indoor heat exchanging unit 1 with the refrigerant pipe disposed adjacent to the compressor 6. The bypass pipe 29 has a first end connected to the refrigerant pipe disposed between the outdoor expansion valve 7b adjacent to the outdoor heat exchanging unit 2 and the indoor expansion valve 7a of the indoor heat exchanging unit 1 and a second end connected to the refrigerant pipe disposed between the compressor 6 and the accumulator 9.

The bypass valve 30 is located on the bypass pipe 29 and opens/closes the bypass pipe 29 according to the control of the controller 28. The bypass valve 30 includes a first bypass valve and a second bypass valve wherein the first bypass valve has a larger capacity compared to the second bypass valve.

In a case where the bypass valve 30 is opened, the controller 28 first opens the first bypass valve and then opens the second bypass valve. In a case where the bypass valve 30 is closed, the controller 28 first closes the second bypass valves, and then closes the first bypass valve.

The bypass valve 30 also includes at least one solenoid valve and an electronic expansion valve (EEV). For example, the solenoid valve may be used as the first bypass valve, and the electronic expansion valve may be used as the second bypass valve. Alternatively, two solenoid valves having different capacities from each other may be provided as the first and second bypass valves or the bypass valve 30 may include a single solenoid valve or a single electronic expansion valve.

When the pressure sensed by the low pressure sensor 26 during a heating operation is below a predetermined pressure the controller 28 opens the bypass valve under a condition in which the temperature sensed by the outdoor temperature sensor 25 is below a predetermined reference temperature. Therein, some of the high pressure refrigerant flowing from the indoor heat exchanging unit 1 to the outdoor heat exchanging unit 2 is bypassed through the bypass pipe 29 and introduced into the compressor 6.

When the bypassed refrigerant flows into the compressor 6, the compression rate of the compressor 6 is increased, such that the amount of refrigerant circulating in the air conditioning system is increased. The heating effect of the air conditioning system is therefore enhanced.

When the bypass valve 30 is opened and the high pressure refrigerant is introduced into the compressor 6 inlet, the pressure sensed by the low pressure sensor 26 and the high pressure sensor 27 is increased. Thereinafter, the controller 28 closes the bypass valve 30 when the pressure sensed by the high pressure sensor 27 exceeds a predetermined pressure.

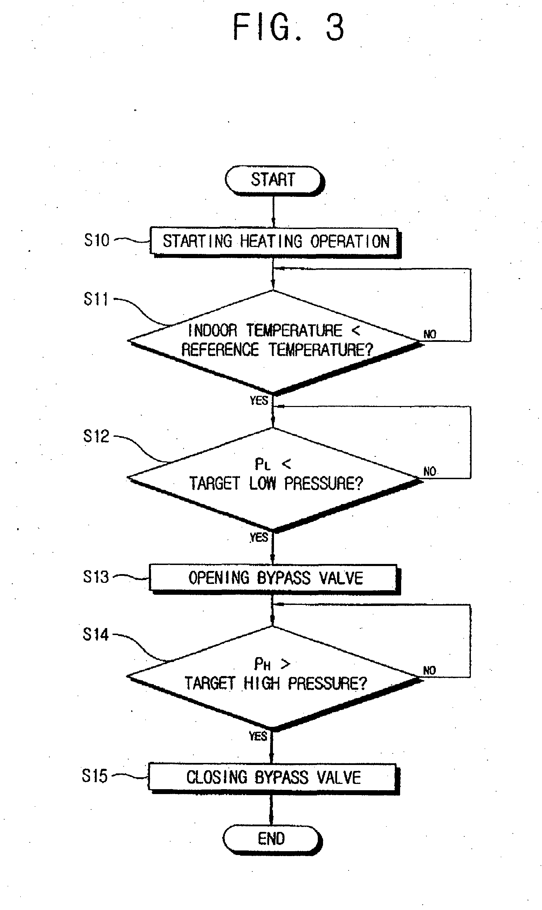

Hereinafter, the operation of the air conditioning system according to the present invention will be described in detail with reference to Figure 3.

At operation S10, the air conditioning system performs a general heating operation as described above. The outdoor temperature sensor 25 senses the outdoor temperature, and transmits the information about the sensed outdoor temperature to the controller 28.

At operation S11, the controller 28 determines whether the sensed outdoor temperature is equal to or below a predetermined reference temperature dependent on the information transmitted by the outdoor temperature sensor 25.

When it is determined that the sensed outdoor temperature is equal to or below the predetermined reference temperature, at operation S12, the controller 28 determines whether the pressure P_{L} sensed by the low pressure sensor 26 is equal to or below a predetermined target low pressure at operation S12.

When the pressure P_{L} sensed by the low pressure sensor 26 is equal to or below the predetermined target low pressure, the controller 28 opens the bypass valve 30 at operation S13. Therefore, a proportion of the high pressure refrigerant flowing from the indoor heat exchanging unit 1 to the outdoor heat exchanging unit 2 is bypassed through the bypass pipe 29 and introduced into the compressor 6 inlet.

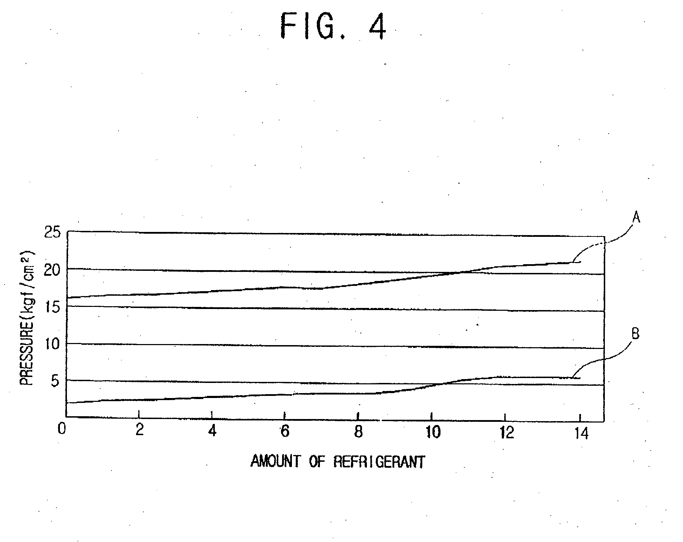

The introduction of high pressure refrigerant into the compressor 6 inlet causes the pressure P_{L} sensed by the low pressure sensor 26 and the pressure P_{H} sensed by the high pressure sensor 27 to increase. Figure 4 is a graph showing that the pressure P_{L} sensed by the low pressure sensor 26 and the pressure P_{H} sensed by the high pressure sensor 27 are changed depending on the amount of the refrigerant bypassed through the bypass pipe 29. In Figure 4, graph B shows a relation between the amount of the refrigerant and the pressure P_{L} sensed by the low pressure sensor 26, and graph A shows a relation between the amount of the refrigerant and the pressure P_{H} sensed by the high pressure sensor 27. The amount of the refrigerant is adjustable by the bypass valve 30.

At operation S14, the controller 28 determines whether the pressure P_{H} sensed by the high pressure sensor 27 is above a predetermined target high pressure. When this occurs, the controller 28 closes the bypass valve 30 at operation S15. Thus, the general heating operation is performed again.

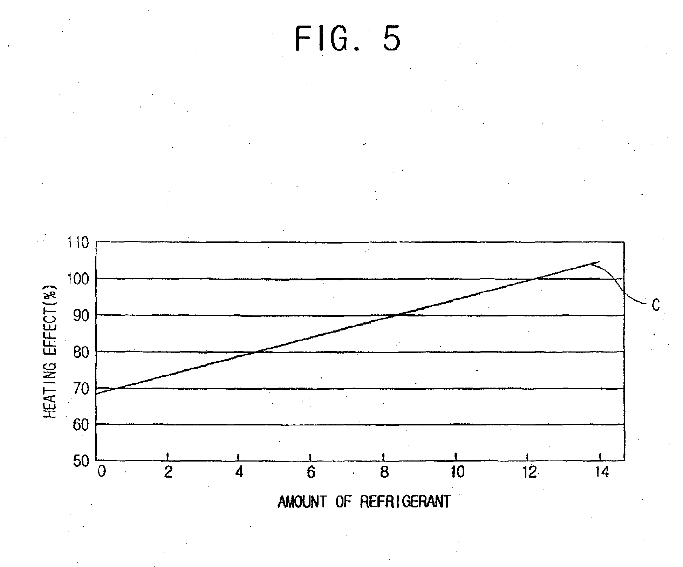

Figure 5 is a graph showing a relation between the control of the bypass valve 30 and the improvement in the heating effect. As shown in Figure 5, the heating effect is improved when the bypass pipe 30 is opened, that is, when the amount of the refrigerant bypassed through the bypass pipe 30 is increased as compared with when the bypass valve 30 is closed, that is, when the amount of the refrigerant bypassed through the bypass pipe 29 is 0 (refer to graph C).

According to the above, the bypass pipe 29 and the bypass valve 30 are controlled by the controller 28 and used to improve the heating effect. However, the bypass pipe 29 and the bypass valve 30 may be used for various objects. For example, the bypass pipe and the bypass valve may be used to protect the system and the compressor from heat exchanging efficiency deterioration due to the rapid change of an indoor or outdoor load and strange conditions.

Although an embodiment of the present invention has been shown and described, it will be appreciated by those skilled in the art that changes may be made in this embodiment without departing from the principles of the invention, the scope of which is defined in the claims and the foregoing description should be regarded as a description of a preferred embodiment only.

## Claims

1. An air conditioner for heating or cooling a space including a compressor (6), an indoor heat exchanger (1) located in said space and an outdoor heat exchanger (2) connected together in a refrigeration circuit, the air conditioner further comprising a control unit (28) for controlling the flow of refrigerant through said refrigeration circuit, **characterised by** a bypass conduit (29) to divert refrigerant that has flowed through the indoor heat exchanger (1) during a heating operation back to the compressor (6) when an outdoor temperature sensed by an outdoor temperature sensor (25) is at or below a predetermined outdoor reference temperature and, when a refrigerant pressure sensed by a low pressure sensor (26) is at or below a predetermined pressure.

2. An air conditioner according to claim 1, comprising a bypass valve (30) disposed in the bypass conduit (29), the control unit (28) being operable to open and close the valve (30) to permit or prevent the flow of refrigerant through the bypass conduit (29).

3. An air conditioner according to claim 2, including an expansion valve (7b), the bypass conduit being positioned such that refrigerant that has passed through the indoor heat exchanger (1) is diverted through the bypass conduit (29) prior to passing through the expansion valve (7b).

4. An air conditioner according to claim 2 or 3, wherein the bypass valve (30) comprises high and low flow capacity valve members, and the control unit (28) is operable to open the high flow capacity valve prior to opening the low flow capacity valve.

5. An air conditioner according to claim 4, wherein the control unit (28) is operable to close the low flow capacity bypass valve (30) prior to closing the high flow capacity valve.

6. An air conditioner according to any of claims 2 to 6, wherein the bypass valve (30) comprises at least one of a solenoid valve and an electronic expansion valve.

7. An air conditioner according to any preceding claim comprising a compressor driver (12) to drive the compressor (6).

8. An air conditioner according to claim 7, wherein the compressor driver (12) comprises a gas heat pump.

9. An air conditioner according to claim 7, further comprising a cooling water circulating system to remove waste heat generated during operation of the compressor, the cooling water circulating system including a cooling water pipe to form a closed loop, and a cooling water pump (19) to induce cooling water to flow.

10. An air conditioner according to claim 9, wherein the cooling water flowing along the cooling water pipe by the cooling water pump (19) absorbs the waste heat so that the compressor driver (12) is cooled and cooling water is heated.

11. An air conditioner according to claim 10, further comprising a cooling water valve (15) and a thermostat (14) to control the cooling water to return to the compressor driver (12) when the heated cooling water is a predetermined temperature or is below the predetermined temperature, and to control the cooling water to flow to the cooling water valve (15) when the heated cooling water is a temperature that is more than the predetermined temperature.

12. An air conditioner according to claim 11, wherein the controller controls the cooling water valve (15) to open and close, allowing the cooling water to selectively flow from the thermostat (14) toward one of a refrigerant heating part (11) and the outdoor heat exchanging unit (2).

13. An air conditioner according to claim 12, wherein the control unit (28) controls the cooling water valve (15) to make the cooling water flow from the thermostat to the refrigerant heating part (11) along a refrigerant heating circulation path during the heating operation, and controls the cooling water valve (15) to make the cooling water flow from the thermostat (14) to a cooling water radiator (4) of the outdoor heat exchanging unit (2) along an outdoor heat exchanging circulation path during a cooling operation.

14. An air conditioner according to claim 1, wherein a high pressure sensor (27) is installed on a high pressure pipe adjacent to an efflux part of the compressor (6), and senses the pressure of the refrigerant flowing in the high pressure pipe, transmitting information about the sensed pressure to the control unit (28).

15. An air conditioner according to claim 1, wherein the low pressure sensor (26) is installed on a low pressure pipe adjacent to an influx part of the compressor (6), and senses the pressure of the refrigerant flowing in the low pressure pipe, transmitting information about the sensed pressured to the control unit (28).

16. A method of controlling an air conditioner for heating or cooling a space including a compressor (6), an indoor heat exchanger (1) located in said space and an outdoor heat exchanger (2) connected together in a refrigeration circuit, the air conditioner further comprising a control unit (28) for controlling the flow of refrigerant through said refrigeration circuit, **characterised by** the step of diverting refrigerant that has flowed through the indoor heat exchanger (2) during a heating operation back to the compressor (6) via a bypass conduit (29), when an outdoor temperature sensed by an outdoor temperature sensor (25) is at or below a predetermined outdoor reference temperature and, when a refrigerant pressure sensed by a low pressure sensor (26) is at or below a predetermined pressure.

17. The method according to claim 16, wherein the air conditioner comprises a bypass valve (30) disposed in the bypass conduit (29), operated by the control unit (28) and on opening and closing adjusts the flow of refrigerant through the bypass conduit (29).

18. The method according to claim 17, wherein the bypass valve (30) comprises high and low flow capacity valve members and the opening of the bypass valve comprises opening the high flow capacity bypass valve prior to opening the low flow capacity bypass valve.

19. The method according to claim 18, wherein the closing the bypass valve (30) comprises closing the low flow capacity bypass valve prior to closing the high flow capacity valve.

## Patentansprüche

1. Klimaanlage zum Heizen oder Kühlen eines Raums, mit einem Kompressor (6), einem Innenraumwärmetauscher (1), der sich in dem genannten Raum befindet, und einem Außenwärmetauscher (2), die in einem Kältekreislauf miteinander verbunden sind, wobei die Klimaanlage ferner eine Steuereinheit (28) zum Steuern des Kältemittelflusses durch den genannten Kältekreislauf aufweist, gekennzeichnet durch eine Umgehungsleitung (29) zum Umleiten von Kältemittel, das während eines Heizbetriebs durch den Innenraumwärmetauscher (1) geströmt ist, zurück zum Kompressor (6), wenn eine von einem Außentemperatursensor (25) erfasste Außentemperatur auf oder unter einer vorbestimmten Referenzaußentemperatur liegt und wenn ein von einem Niederdrucksensor (26) erfasster Kältemitteldruck auf oder unter einem vorbestimmten Druck liegt.

2. Klimaanlage nach Anspruch 1, die ein Bypass-Ventil (30) aufweist, das in der Umgehungsleitung (29) angeordnet ist, wobei die Steuereinheit (28) zum Öffnen und Schließen des Ventils (30) funktionell ist, um den Kältemitteldurchfluss durch die Umgehungsleitung (29) zuzulassen oder zu verhindern.

3. Klimaanlage nach Anspruch 2, die ein Expansionsventil (7b) beinhaltet, wobei die Umgehungsleitung so positioniert ist, dass Kältemittel, das durch den Innenraumwärmetauscher (1) hindurchgeströmt ist, durch die Umgehungsleitung (29) umgeleitet wird, bevor es durch das Expansionsventil (7b) strömt.

4. Klimaanlage nach Anspruch 2 oder 3, wobei das Bypass-Ventil (30) Ventilelemente mit hoher oder niedriger Durchflusskapazität aufweist und die Steuereinheit (28) zum Öffnen des Ventils mit hoher Durchflusskapazität vor dem Öffnen des Ventils mit niedriger Durchflusskapazität funktionell ist.

5. Klimaanlage nach Anspruch 4, wobei die Steuereinheit (28) zum Schließen des Bypass-Ventils mit niedriger Durchflusskapazität (30) vor dem Schließen des Ventils mit hoher Durchflusskapazität funktionell ist.

6. Klimaanlage nach einem der Ansprüche 2 bis 6, wobei das Bypass-Ventil (30) ein Magnetventil und/oder ein elektronisches Expansionsventil aufweist.

7. Klimaanlage nach einem der vorhergehenden Ansprüche, die einen Kompressorantrieb (12) zum Antreiben des Kompressors (6) aufweist.

8. Klimaanlage nach Anspruch 7, wobei der Kompressorantrieb (12) eine Gas-Wärmepumpe umfasst.

9. Klimaanlage nach Anspruch 7, die ferner ein Kühlwasserumwälzsystem zum Entfernen von während des Betriebs des Kompressors erzeugter Abhitze aufweist, wobei das Kühlwasserumwälzsystem ein Kühlwasserrohr zum Bilden einer geschlossenen Schleife und eine Kühlwasserpumpe (19) zum Veranlassen des Kühlwassers zum Strömen beinhaltet.

10. Klimaanlage nach Anspruch 9, wobei das Kühlwasser, das durch die Kühlwasserpumpe (19) im Kühlwasserrohr entlang strömt, die Abhitze so absorbiert, dass der Kompressorantrieb (12) gekühlt wird und das Kühlwasser erwärmt wird.

11. Klimaanlage nach Anspruch 10, die ferner ein Kühlwasserventil (15) und ein Thermostat (14) zum Steuern des Kühlwassers, so dass es zum Kompressorantrieb (12) zurückströmt, wenn das erwärmte Kühlwasser eine vorbestimmte Temperatur hat oder unter der vorbestimmten Temperatur liegt, und zum Steuern des Kühlwassers, so dass es zum Kühlwasserventil (15) strömt, wenn das erwärmte Kühlwasser eine Temperatur hat, die höher als die vorbestimmte Temperatur ist, aufweist.

12. Klimaanlage nach Anspruch 11, wobei die Steuerung das Kühlwasserventil (15) zum Öffnen und Schließen ansteuert, so dass das Kühlwasser selektiv vom Thermostat (14) zu einem Kältemittelheizungsteil (11) oder der Außen-Wärmetauschereinheit (2) hin strömen darf.

13. Klimaanlage nach Anspruch 12, wobei die Steuereinheit (28) das Kühlwasserventil (15) ansteuert, um das Kühlwasser während des Heizbetriebs vom Thermostat an einem Kältemittelheizungsumlaufweg entlang zu dem Kältemittelheizungsteil (11) strömen zu lassen, und das Kühlwasserventil (15) ansteuert, um das Kühlwasser während eines Kühlbetriebs vom Thermostat (14) an einem Außen-Wärmetauscherumlaufweg entlang zu einem Kühlwasserkühler (4) der Außenwärmetauschereinheit (2) strömen zu lassen.

14. Klimaanlage nach Anspruch 1, wobei ein Hochdrucksensor (27) an einem Hochdruckrohr neben einem Ausflussteil des Kompressors (6) installiert ist und den Druck des im Hochdruckrohr strömenden Kältemittels erfasst, wobei es Informationen über den erfassten Druck an die Steuereinheit (28) sendet.

15. Klimaanlage nach Anspruch 1, wobei der Niederdrucksensor (26) an einem Niederdruckrohr neben einem Zuflussteil des Kompressors (6) installiert ist und den Druck des im Niederdruckrohr strömenden Kältemittels erfasst, wobei es Informationen über den erfassten Druck an die Steuereinheit (28) sendet.

16. Verfahren zum Steuern einer Klimaanlage zum Heizen oder Kühlen eines Raums, die einen Kompressor (6), einen Innenraumwärmetauscher (1), der sich in dem genannten Raum befindet, und einen Außenwärmetauscher (2) beinhaltet, die in einem Kältekreislauf miteinander verbunden sind, wobei die Klimaanlage ferner eine Steuereinheit (28) zum Steuern des Kältemittelflusses durch den genannten Kältekreislauf aufweist, gekennzeichnet durch den Schritt des Umleitens von Kältemittel, das während eines Heizbetriebs durch den Innenraumwärmetauscher (1) geströmt ist, über eine Umgehungsleitung (29) zurück zum Kompressor (6), wenn eine von einem Außentemperatursensor (25) erfasste Außentemperatur auf oder unter einer vorbestimmten Referenzaußentemperatur liegt und wenn ein von einem Niederdrucksensor (26) erfasster Kältemitteldruck auf oder unter einem vorbestimmten Druck liegt.

17. Verfahren nach Anspruch 16, wobei die Klimaanlage ein Bypass-Ventil (30) aufweist, das in der Umgehungsleitung (29) angeordnet ist, von der Steuereinheit (28) betätigt wird und beim Öffnen und Schließen den Kältemitteldurchfluss durch die Umgehungsleitung (29) einstellt.

18. Verfahren nach Anspruch 17, wobei das Bypass-Ventil (30) Ventilelemente mit hoher oder niedriger Durchflusskapazität aufweist und das Öffnen des Bypass-Ventils das Öffnen des Bypass-Ventils mit hoher Durchflusskapazität vor dem Öffnen des Bypass-Ventils mit niedriger Durchflusskapazität aufweist.

19. Verfahren nach Anspruch 18, wobei das Schließen des Bypass-Ventils (30) das Schließen des Bypass-Ventils mit niedriger Durchflusskapazität vor dem Schließen des Ventils mit hoher Durchflusskapazität aufweist.

## Revendications

1. Climatiseur pour chauffer ou refroidir un espace comportant un compresseur (6), un échangeur thermique intérieur (1) situé dans ledit espace et un échangeur thermique extérieur (2) connectés ensemble dans un circuit de réfrigération, le climatiseur comportant en outre une unité de commande (28) pour commander l'écoulement d'un réfrigérant à travers ledit circuit de réfrigération, **caractérisé par** un conduit de dérivation (29) pour dévier le réfrigérant qui s'est écoulé à travers l'échangeur thermique intérieur (1) durant une opération de chauffage de retour vers le compresseur (6) quand une température extérieure détectée par un capteur de température extérieure (25) est égale ou inférieure à une température de référence extérieure prédéterminée et quand une pression de réfrigérant détectée par un capteur basse pression (26) est égale ou inférieure à une pression prédéterminée.

2. Climatiseur selon la revendication 1, comprenant un clapet de dérivation (30) disposé dans le conduit de dérivation (29), l'unité de commande (28) étant exploitable pour ouvrir et fermer le clapet (30) afin de permettre ou d'empêcher l'écoulement de réfrigérant à travers le conduit de dérivation (29).

3. Climatiseur selon la revendication 2, comportant une vanne de détente (7b), le conduit de dérivation étant positionné de telle sorte que le réfrigérant qui a passé à travers l'échangeur thermique intérieur (1) soit dévié à travers le conduit de dérivation (29) avant de passer à travers la vanne de détente (7b).

4. Climatiseur selon la revendication 2 ou 3, dans lequel le clapet de dérivation (30) comprend des éléments de clapet de haute et faible capacité d'écoulement, et l'unité de commande (28) est exploitable pour ouvrir le clapet de haute capacité d'écoulement avant d'ouvrir le clapet de faible capacité d'écoulement.

5. Climatiseur selon la revendication 4, dans lequel l'unité de commande (28) est exploitable pour fermer le clapet de dérivation de faible capacité d'écoulement (30) avant de fermer le clapet de haute capacité d'écoulement.

6. Climatiseur selon l'une quelconque des revendications 2 à 6, dans lequel le clapet de dérivation (30) comprend au moins l'une d'une électrovanne et d'une vanne de détente électronique.

7. Climatiseur selon l'une quelconque des revendications précédentes, comprenant un pilote de compresseur (12) pour piloter le compresseur (6).

8. Climatiseur selon la revendication 7, dans lequel le pilote de compresseur (12) comprend une pompe à chaleur à gaz.

9. Climatiseur selon la revendication 7, comprenant en outre un système de circulation d'eau de refroidissement pour éliminer la chaleur perdue générée durant le fonctionnement du compresseur, le système de circulation d'eau de refroidissement comportant un tuyau d'eau de refroidissement pour former une boucle fermée, et une pompe à eau de refroidissement (19) pour induire l'écoulement de l'eau de refroidissement.

10. Climatiseur selon la revendication 9, dans lequel l'eau de refroidissement s'écoulant le long du tuyau d'eau de refroidissement par l'action de la pompe à eau de refroidissement (19) absorbe la chaleur perdue de telle sorte que le pilote de compresseur (12) soit refroidi et que l'eau de refroidissement soit chauffée.

11. Climatiseur selon la revendication 10, comprenant en outre une vanne d'eau de refroidissement (15) et un thermostat (14) pour commander le retour de l'eau de refroidissement vers le pilote de compresseur (12) quand l'eau de refroidissement chauffée est à une température prédéterminée ou est inférieure à la température prédéterminée, et commander l'écoulement de l'eau de refroidissement vers la vanne d'eau de refroidissement (15) quand l'eau de refroidissement chauffée est à une température supérieure à la température prédéterminée.

12. Climatiseur selon la revendication 11, dans lequel le contrôleur commande l'ouverture et la fermeture de la vanne d'eau de refroidissement (15), permettant à l'eau de refroidissement de s'écouler sélectivement depuis le thermostat (14) vers l'une d'une pièce de chauffage de réfrigérant (11) et de l'unité d'échange thermique extérieure (2).

13. Climatiseur selon la revendication 12, dans lequel l'unité de commande (28) commande la vanne d'eau de refroidissement (15) de telle sorte que l'eau de refroidissement s'écoule depuis le thermostat vers la pièce de chauffage de réfrigérant (11) le long d'un trajet de circulation de chauffage de réfrigérant durant l'opération de chauffage, et commande la vanne d'eau de refroidissement (15) de telle sorte que l'eau de refroidissement s'écoule depuis le thermostat (14) vers un radiateur d'eau de refroidissement (4) de l'unité d'échange thermique extérieure (2) le long d'un trajet de circulation d'échange thermique extérieur durant une opération de refroidissement.

14. Climatiseur selon la revendication 1, dans lequel un capteur haute pression (27) est installé sur un tuyau haute pression adjacent à une pièce de sortie du compresseur (6), et détecte la pression du réfrigérant qui s'écoule dans le tuyau haute pression, transmettant des informations relatives à la pression détectée à l'unité de commande (28).

15. Climatiseur selon la revendication 1, dans lequel le capteur basse pression (26) est installé sur un tuyau basse pression adjacent à une pièce d'entrée du compresseur (6), et détecte la pression du réfrigérant qui s'écoule dans le tuyau basse pression, transmettant des informations relatives à la pression détectée à l'unité de commande (28).

16. Procédé de commande d'un climatiseur pour chauffer ou refroidir un espace comportant un compresseur (6), un échangeur thermique intérieur (1) situé dans ledit espace et un échangeur thermique extérieur (2) connectés ensemble dans un circuit de réfrigération, le climatiseur comportant en outre une unité de commande (28) pour commander le flux de réfrigérant à travers ledit circuit de réfrigération, **caractérisé par** l'étape de déviation du réfrigérant qui s'est écoulé à travers l'échangeur thermique intérieur (1) durant une opération de chauffage de retour vers le compresseur (6) via un conduit de dérivation (29), quand une température extérieure détectée par un capteur de température extérieur (25) est égale ou inférieure à une température de référence extérieure prédéterminée et, quand une pression de réfrigérant détectée par un capteur de basse pression (26) est égale ou inférieure à une pression prédéterminée.

17. Procédé selon la revendication 16, dans lequel le climatiseur comprend un clapet de dérivation (30) disposé dans le conduit de dérivation (29), actionné par l'unité de commande (28), lequel à l'ouverture et la fermeture règle l'écoulement du réfrigérant à travers le conduit de dérivation (29).

18. Procédé selon la revendication 17, dans lequel le clapet de dérivation (30) comprend des éléments de clapet de haute et faible capacité d'écoulement, et l'ouverture du clapet de dérivation comprend l'ouverture du clapet de dérivation de haute capacité d'écoulement avant l'ouverture du clapet de dérivation de faible capacité d'écoulement.

19. Procédé selon la revendication 18, dans lequel la fermeture du clapet de dérivation (30) comprend la fermeture du clapet de dérivation de faible capacité d'écoulement avant la fermeture du clapet de haute capacité d'écoulement.
